# EUROPÄISCHE PATENTSCHRIFT

(11) **EP 0 363 730 B1**
(45) Veröffentlichungstag und Bekanntmachung des Hinweises auf die Patenterteilung: **31.08.1994**
(21) Anmeldenummer: 89117830.3
(22) Anmeldetag: 27.09.1989
(51) Int. Cl.: C09B 67/48, C09B 67/10, D06P 1/18, C09B 29/085

(54) **Färbestabiler Monoazofarbstoff, dessen Herstellung und Verwendung**
Monoazo dye with a stable colour, its manufacture and its use
Colorant monoazoique de couleur stable, sa préparation et son utilisation

(30) Priorität: 11.10.1988 DE 3834530
(43) Veröffentlichungstag der Anmeldung: 18.04.1990
(73) Patentinhaber: CASSELLA Aktiengesellschaft, D-60386 Frankfurt (DE)
(72) Erfinder: Kruse, Hubert, D-6233 Kelkheim (DE); Opitz, Konrad, Dr., D-6237 Liederbach (DE); Bühler, Ulrich, Dr., D-8755 Alzenau (DE); Steckelberg, Willi, Dr., D-6238 Hofheim (DE)
(74) Vertreter: Muley, Ralf, Dr.

(56) Entgegenhaltungen:
- EP-A- 0 030 291
- EP-A- 0 031 478
- EP-A- 0 066 235
- EP-A- 0 068 186
- EP-A- 0 240 902
- US-A- 2 007 382

## Beschreibung

Die vorliegende Erfindung betrifft eine neue färbestabile kristallographische Modifikation ("β-Modifikation") des Farbstoffs der Formel I 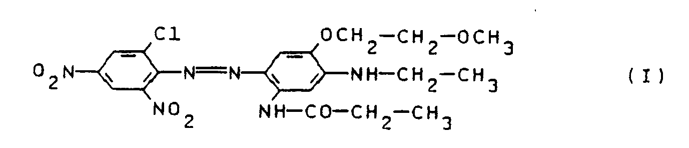
mit dem Röntgenbeugungsdiagramm (Cu-K_{α}-Strahlung) mit folgenden Linien bei Beugungswinkel 2 ϑ (°) :

| | |
|---|---|
| Linien starker Intensität: | 4,8; 25,4; 26,2; |
| Linien mittlerer Intensität: | 7,6; 8,1; 14,5; 19,7; 20,5; 21,5; 22,9; 23,8; 24,3 |
| Linien kleiner Intensität: | 6,2; 6,6; 11,1; 11,8; 12,4; 13,0; 13,6; 15,3; 18,7; 28,0; 28,7; 29,4; 30,5; 31,5; 32,3. |

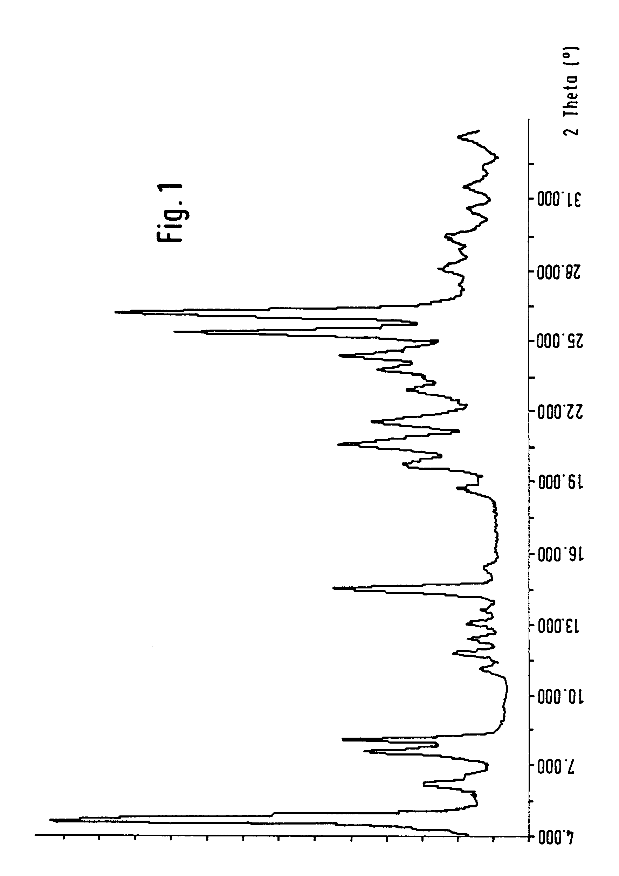

Das mit Cu K_{α}-Strahlung aufgenommene Röntgenbeugungsdiagramm der färbestabilen β-Modifikation ist in Figur 1 dargestellt. Zur Aufnahme der Röntgenbeugungsdiagramme wurde ein rechnergesteuertes Siemens D 500 Pulverdifraktometer benutzt.

Der Farbstoff der vorstehend genannten Formel wird durch Diazotieren von 2,4-Dinitro-6-chlor-anilin in konzentrierter Schwefelsäure und anschließendes Kuppeln der so erhaltenen Diazolösung mit 4-Propionylamino-2-N-ethylamino-(2-methoxy)ethoxybenzol in wäßrig mineralsaurem Medium erhalten. Dabei fällt die färbeinstabile α-Modifikation an, die unter den in der Praxis des Färbens auftretenden Bedingungen keine genügende Stabilität besitzt und beim Trocknungsprozeß zur Herstellung von Farbstoffpulvern nur ungenügend thermisch belastbar ist.

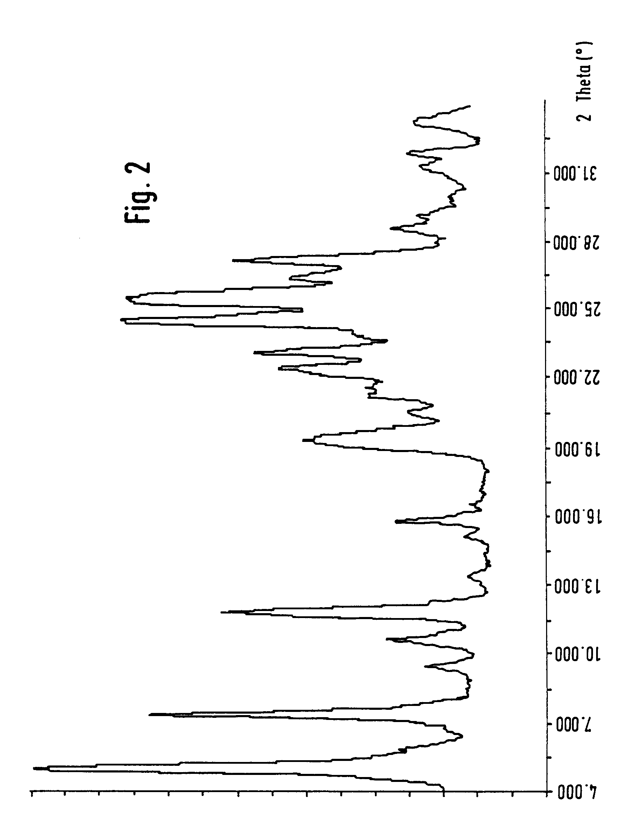

Die färbeinstabile α-Modifikation weist das in Figur 2 gezeigte Röntgenbeugungsdiagramm (Cu K_{α}-Strahlung) auf mit folgenden Linien bei Beugungswinkel 2 ϑ (°) :

| | |
|---|---|
| Linien starker Intensität: | 5,2; 7,5; 11,9; 23,2; 24,5; 25,5; 27,2; |
| Linien mittlerer Intensität: | 5,9; 9,5; 10,8; 15,9; 19,4; 20,5; 21,3; 22,5; 23,9; 26,5; 28,6; 29,2; 31,3; 31,9; 33,2; |
| Linien kleiner Intensität: | 13,4; 15,2; 16,5. |

Die färbeinstabile α-Modifikation des Farbstoffs der Formel I wird in die färbestabile β-Modifikation durch Erhitzen auf Temperaturen von 60 bis 180°C, vorzugsweise 80 bis 140°C, überführt. Dieses Erhitzen kann in verschiedener Weise durchgeführt werden. In der Regel wird die färbeinstabile α-Modifikation in wäßriger Suspension, zweckmäßigerweise unter Rühren, auf die genannten Temperaturen erhitzt. Es ist zweckmäßig, den pH-Wert der wäßrigen Suspension etwa neutral einzustellen. Der zu erhitzenden Suspension werden gegebenenfalls oberflächenaktive Verbindungen und/oder Lösungsmittel zugesetzt. Wenn auf Temperaturen erhitzt wird, die über dem Siedepunkt der flüssigen Phase liegen, ist die Anwendung von Überdruck erforderlich. Das Erhitzen wird so lange durchgeführt, bis die α-Modifikation in die β-Modifikation umgewandelt worden ist, was in der Regel 2 bis 6 Stunden dauert. Die Umwandlung kann röntgenographisch oder mikroskopisch an entnommenen Proben verfolgt werden.

Oberflächenaktive Verbindungen können anionisch, kationisch oder nichtionisch sein und z.B. Dispergiermittel, Emulgatoren oder Netzmittel darstellen. Geeignete oberflächenaktive Verbindungen sind beispielsweise diisobutylnaphthalinsulfonsaures Natrium, Anlagerungsprodukte von Ethylenoxid und/oder Propylenoxyd an Fettalkohole, wie z.B. das Anlagerungsprodukt von 25 mol Ethylenoxid an 1 mol Stearylalkohol oder von 2 mol Ethylenoxid an 1 mol Laurylalkohol, Gemische aus Alkyldimethylbenzylammoniumchloriden, Fettsäurepolyglykolsäureester, tertiäre Phosphorsäureester, Alkalisalze von Ligninsulfonaten, Polyvinylsulfonate, Sulfitcelluloseablauge oder oxalkylierte Novolake.

Oberflächenaktive Mittel können einzeln oder in Kombination miteinander verwendet werden. Es werden normalerweise 1 bis 500 Gew.%, vorzugsweise 5 bis 400 Gew.%, oberflächenaktive Mittel, bezogen auf die umzuwandelnde α-Modifikation eingesetzt.

Falls der wäßrigen Suspension ein oder mehrere Lösungsmittel zugesetzt werden, kommen inbesondere solche in Betracht, die wasserlöslich sind, wie z.B. Methanol, Ethanol, Isopropanol und Isobutanol.

Das Erhitzen kann auch im Verlauf der üblichen Überführung des Farbstoffs in eine hohe Feinverteilung (Finish) vorgenommen werden. Die färbeinstabile α-Modifikation wird dabei, vorzugsweise unter Zusatz von Dispergiermitteln, wie beispielsweise Polyvinylsulfonaten, Kondensationsprodukten aus Naphthalinsulfonsäure und Formaldehyd oder aus Phenol, Formaldehyd und Natriumbisulfit, Alkalisalzen von Ligninsulfonaten oder Sulfitcelluloseablauge, sowie gegebenenfalls anderen üblichen Zusätzen (wie z.B. Staubschutz-, Frostschutz-, Netzmittel, Austrocknungsverhinderer etc.) naß auf üblichen Vorrichtungen, wie z.B. Mühlen oder Kneter, in eine feindisperse Form überführt. Geeignete Mühlen sind z.B. Kugel-, Schwing-, Perl- oder Sandmühlen. Wenn die Überführung des Farbstoffs in eine feindisperse Form bei den genannten Temperaturen von 60 bis 180°C, vorzugsweise 80 bis 140°C, durchgeführt wird, erfolgt dabei auch eine Umwandlung der färbeinstabilen α-Modifikation des Farbstoffs der Formel I in die färbestabile β-Modifikation des Farbstoffs der Formel I. Falls die färbeinstabile α-Modifikation im Rahmen einer Feinverteilung in die färbestabile β-Modifikation überführt wird, werden dabei normalerweise Temperaturen von 60 bis 95°C eingehalten.

Sofern die färbestabile β-Modifikation des Farbstoffs der Formel I nicht durch Erhitzen im Verlauf der Überführung in eine hohe Feinverteilung hergestellt worden ist und daher bereits in hoher Feinverteilung vorliegt, wird sie für die färberische Anwendung bzw. für die Herstellung von Färbepräparaten in der bereits genannten an sich bekannten Weise in eine hohe Feinverteilung überführt. Bei der Herstellung von Färbepräparaten werden dabei in an sich bekannter Weise gegebenenfalls übliche Zusätze, wie z.B. Staubschutz-, Frostschutz-, Netzmittel, Austrocknungsverhinderer, Fließverbesserungsmittel etc. zugesetzt.

Bei der Feinverteilung werden die Farbstoffteilchen mechanisch so weit zerkleinert, bis eine optimale spezifische Oberfläche erreicht und die Sedimentation der Farbstoffteilchen in einer flüssigen Farbstoffzubereitung bzw. im Färbebad möglichst gering ist. Die Größe der Farbstoffteilchen liegt nach beendeter Feinverteilung im allgemeinen bei etwa 0,1 bis 10 µm.

Der für die Herstellung von Farbstoffpulvern erforderliche Trocknungsprozeß wird in handelsüblichen Zerstäubungstrocknern durchgeführt.

Die Herstellung von Farbstoffpulvern durch Zerstäubungstrocknung der feinverteilten in β-Modifikation vorliegenden Farbstoffteilchen kann bei höherer thermischer Belastung der Dispersion erfolgen, ohne daß diese Schaden nimmt. Damit ist durch Erhöhung des ΔT-Wertes zwischen Ein- und Ausgangstemperatur der Trockner-Luft eine deutliche Verbesserung der Raum-Zeit-Ausbeute gegeben.

Die flüssigen oder pulverförmigen Präparationen der färbestabilen β-Modifikation eignen sich im Gegensatz zu vergleichbaren Präparationen der α-Modifikation uneingeschränkt zum Färben von Fasermaterialien aus Celluloseestern, synthetischen linearen Polyestern, wie Polyethylenglykolterephthalat, oder Mischgeweben solcher Polyester mit Wolle oder Zellwolle bei Temperaturen zwischen 90 und 210°C.

Die Präparationen, welche die färbestabile β-Modifikation enthalten, flocken in wäßrigem Medium und bei Einwirkung hoher Temperaturen nicht aus, was besonders für die Färbung von Wickelkörpern, beispielsweise Kreuzspulen, von Bedeutung ist.

Die wesentlich bessere Eignung der die färbestabile β-Modifikation enthaltenden Präparationen für die Praxis machen sich bereits in den verschiedensten Färbereitests durch deutlich überlegene Prüfergebnisse bemerkbar. Beispielsweise ist dies beim Heat-Stability-Test, der ein Kriterium für die Flottenstabilität ist, beim Stippentest, der eine Aussage über die Eignung zur Klotzfärbung ermöglicht und im Praxi-Test auf Mischgeweben, wie solchen aus Polyesterfasern und Zellwolle, der Fall.

Der Praxi-Test gestattet es, die Eignung von Dispersionsfarbstoffpräparationen für das Färben von Wickelkörpern mit geringem Aufwand praxisgerecht zu prüfen.

In den folgenden Beispielen sind Teile und Prozente, wenn nicht anders vermerkt, Gewichtsteile und Gewichtsprozente.

### Beispiel 1

a) 100 Teile des Farbstoffs der Formel I werden durch Diazotieren von 2,4-Dinitro-6-chlor-anilin in konzentrierter Schwefelsäure und durch Kuppeln der so erhaltenen Diazolösung mit einer schwach sauren Lösung von 4-Propionylamino-2-N-ethylamino-(2-methoxy)ethoxybenzol hergestellt. Der eingesetzte Kuppler läßt sich z.B. durch Ethylierung von 2-Amino-4-propionylamino-(2-methoxy)ethoxybenzol mit Diethylsulfat oder durch reduktive Monoethylierung von 2-Amino-4-propionylamino-(2-methoxy)ethoxybenzol mit Acetaldehyd synthetisieren. Der Farbstoff (α-Modifikation) wird durch Filtration mit anschließender Neutralwäsche als wasserfeuchter Preßkuchen isoliert.

b) 100 Teile des nach a) hergestellten Farbstoffs werden in 500 ml Wasser suspendiert, 2 Stunden bei 130-135°C gerührt und die erhaltene β-Modifikation des Farbstoffs wird nach Abkühlung als wasserfeuchter Preßkuchen abfiltriert.

c) Der nach b) hergestellte Farbstoff wird mit 110 Teilen eines Na-Ligninsulfonats, 7 Teilen eines oxalkylierten Novolaks und Wasser in einer Sandmühle unter Kühlung feinverteilt (Teilchengröße bis 90% gleich oder kleiner 1 µm) und in einem Zerstäubungstrockner bei einer Lufteingangstemperatur von 155°C und einer Ausgangstemperatur von 80°C getrocknet. Man erhält eine pulverförmige stippenfreie Einstellung des Farbstoffs, die allen anwendungstechnischen Anforderungen gerecht wird.

d) Wird im Beispiel 1 c) der nach a) hergestellte Farbstoff eingesetzt, so erhält man unter den aufgeführten Trocknungsbedingungen ein Pulver, das zu stark stippigen Klotzfärbungen führt.

### Beispiel 2

Der nach Beispiel 1b) hergestellte Farbstoff (β-Modifikation) wird mit 50 Teilen eines Na-Ligninsulfonates, 25 Teilen eines Kondensationsproduktes aus Naphthalinsulfonsäure und Formaldehyd und Wasser in einer Sandmühle unter Kühlung gemahlen. Die erhaltene 27%ige Flüssigeinstellung ist lagerstabil, zeichnet sich durch egale und reibechte Wickelkörperfärbungen und eine ausgezeichnete Flottenstabilität aus.

### Beispiel 3

Der nach Beispiel 1a) hergestellte Farbstoff (α-Modifikation) wird mit 110 Teilen eines Na-Ligninsulfonates, 7 Teilen eines oxalkylierten Novolaks und Wasser in einem Rührgefäß angeteigt, neutral gestellt und bei 90-95°C so lange gerührt, bis eine vollständige Umwandlung in die färbestabile β-Modifikation erfolgt ist (2 bis 4 h). Nach Abkühlung wird die Suspension wie in Beispiel 1c) angegeben zu einem Farbstoffpulver verarbeitet. Man erhält eine pulverförmige Einstellung, die allen anwendungstechnischen Anforderungen gerecht wird.

### Beispiel 4

Der nach Beispiel 1a) hergestellte Farbstoff (α-Modifikation) wird in einer wäßrigen Suspension, die 10% Isobutylalkohol enthält, 2 Stunden auf 90-95°C erhitzt und nach dem Erkalten abfiltriert. Der wasserfeuchte Nutschkuchen (β-Modifikation) wird mit 110 Teilen eines Na-Ligninsulfonates, 7 Teilen eines oxalkylierten Novolaks und Wasser gemäß Beispiel 1c) feinverteilt und sprühgetrocknet. Man erhält eine pulverförmige stippenfreie Einstellung des Farbstoffs, die allen anwendungstechnischen Anforderungen gerecht wird.

### Beispiel 5

Der nach Beispiel 1a) hergestellte Farbstoff (α-Modifikation) wird mit 110 Teilen eines Na-Ligninsulfonates, 7 Teilen eines oxalkylierten Novolaks und Wasser in einer Sandmühle bei 80-85°C bis zur Feinverteilung (Teilchengröße bis 90% gleich oder kleiner 1µm) gemahlen. Dabei wird die färbeinstabile α-Modifikation in die färbestabile β-Modifikation umgewandelt. Die Präparation wird in einem Zerstäubungstrockner wie in Beispiel 1c) getrocknet. Die erhaltene pulverförmige Einstellung ist stippenfrei und genügt allen anwendungstechnischen Anforderungen.

## Patentansprüche (Patentansprüche für folgende(n) Vertragsstaat(en): DE, GB, FR, IT, LI, CH)

1. Färbestabile β-Modifikation des Farbstoffs der Formel I 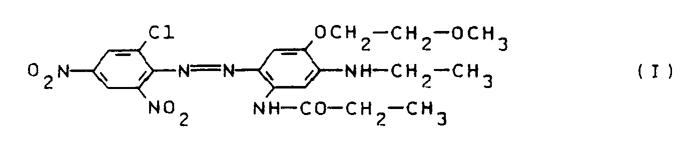 mit dem Röntgenbeugungsdiagramm (Cu-K_{α}-Strahlung) mit folgenden Linien bei Beugungswinkel 2 ϑ (°):
| | |
|---|---|
| Linien starker Intensität: | 4,8; 25,4; 26,2; |
| Linien mittlerer Intensität: | 7,6; 8,1; 14,5; 19,7; 20,5; 21,5; 22,9; 23,8; 24,3; |
| Linien kleiner Intensität: | 6,2; 6,6; 11,1; 11,8; 12,4; 13,0; 13,6; 15,3; 18,7; 28,0; 28,7; 29,4; 30,5; 31,5; 32,3. |

2. Verfahren zur Herstellung der in Anspruch 1 angegebenen färbestabilen β-Modifikation des Farbstoffs der Formel I, dadurch gekennzeichnet, daß der Farbstoff der Formel I in färbeinstabiler α-Modifikation auf Temperaturen von 60 bis 180°C erhitzt wird.

3. Verfahren nach Anspruch 2, dadurch gekennzeichnet, daß die färbeinstabile α-Modifikation auf Temperaturen von 80 bis 140°C erhitzt wird.

4. Verfahren nach den Ansprüchen 2 und/oder 3, dadurch gekennzeichnet, daß die färbeinstabile α-Modifikation in wäßriger Suspension erhitzt wird.

5. Verfahren nach einem oder mehreren der Ansprüche 2 bis 4, dadurch gekennzeichnet, daß die färbeinstabile α-Modifikation in Gegenwart eines oder mehrerer oberflächenaktiver Mittel und/oder eines oder mehrerer Lösungsmittel erhitzt wird.

6. Verfahren nach einem oder mehreren der Ansprüche 2 bis 5, dadurch gekennzeichnet, daß die färbeinstabile α-Modifikation im Verlauf der Überführung in eine hohe Feinverteilung erhitzt wird.

7. Verwendung der in Anspruch 1 genannten färbestabilen Modifikation (β-Modifikation) des Farbstoffs der Formel I zum Färben und Bedrucken von Fasermaterialien aus Celluloseestern oder synthetischen linearen Polyestern oder Mischgeweben solcher Polyesterfasermaterialien mit Wolle oder Zellwolle.

## Patentansprüche (Patentansprüche für folgende(n) Vertragsstaat(en): ES)

1. Verfahren zur Herstellung der färbestabilen β-Modifikation des Farbstoffs der Formel I 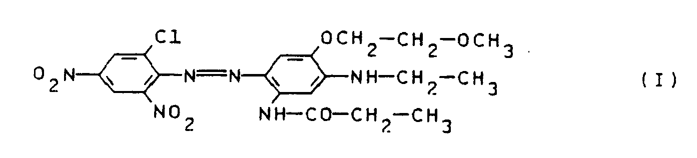 mit dem Röntgenbeugungsdiagramm (Cu-K_{α}-Strahlung) mit folgenden Linien bei Beugungswinkel 2 ϑ (°):
| | |
|---|---|
| Linien starker Intensität: | 4,8; 25,4; 26,2; |
| Linien mittlerer Intensität: | 7,6; 8,1; 14,5; 19,7; 20,5; 21,5; 22,9; 23,8; 24,3; |
| Linien kleiner Intensität: | 6,2; 6,6; 11,1; 11,8; 12,4; 13,0; 13,6; 15,3; 18,7; 28,0; 28,7; 29,4; 30,5; 31,5; 32,3, |
dadurch gekennzeichnet, daß der Farbstoff der Formel I in färbeinstabiler α-Modifikation auf Temperaturen von 60 bis 180°C erhitzt wird.

2. Verfahren nach Anspruch 1, dadurch gekennzeichnet, daß die färbeinstabile α-Modifikation auf Temperaturen von 80 bis 140°C erhitzt wird.

3. Verfahren nach den Ansprüchen 1 und/oder 2, dadurch gekennzeichnet, daß die färbeinstabile α-Modifikation in wäßriger Suspension erhitzt wird.

4. Verfahren nach einem oder mehreren der Ansprüche 1 bis 3, dadurch gekennzeichnet, daß die färbeinstabile α-Modifikation in Gegenwart eines oder mehrerer oberflächenaktiver Mittel und/oder eines oder mehrerer Lösungsmittel erhitzt wird.

5. Verfahren nach einem oder mehreren der Ansprüche 1 bis 4, dadurch gekennzeichnet, daß die färbeinstabile α-Modifikation im Verlauf der Überführung in eine hohe Feinverteilung erhitzt wird.

6. Verwendung der nach Anspruch 1 hergestellten färbestabilen Modifikation (β-Modifikation) des Farbstoffs der in Anspruch 1 angegebenen Formel I zum Färben und Bedrucken von Fasermaterialien aus Celluloseestern oder synthetischen linearen Polyestern oder Mischgeweben solcher Polyesterfasermaterialien mit Wolle oder Zellwolle.

## Claims (Claims for the following Contracting State(s): DE, GB, FR, IT, LI, CH)

1. β-modification, which is stable under dyeing conditions, of the dyestuff of the formula I 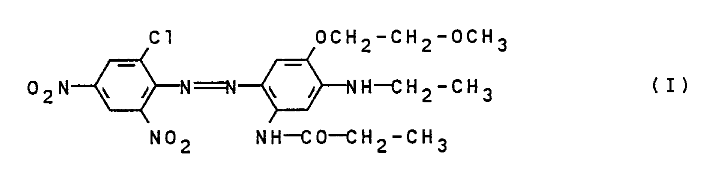 with the x-ray diffraction diagram (Cu-Kα radiation) having the following lines at the diffraction angle 2 ϑ (°):
| | |
|---|---|
| lines of high intensity: | 4.8; 25.4; 26.2; |
| lines of medium intensity: | 7.6; 8.1; 14.5; 19.7; 20.5; 21.5; 22.9; 23.8; 24.3; |
| lines of low intensity: | 6.2; 6.6; 11.1; 11.8; 12.4; 13.0; 13.6; 15.3; 18.7; 28.0; 28.7; 29.4; 30.5; 31.5; 32.3. |

2. Process for the preparation of the β-modification, which is stable under dyeing conditions and is described in Claim 1, of the dyestuff of the formula I, characterized in that the dyestuff of the formula I in the α-modification, which is unstable under dyeing conditions, is heated at temperatures of 60 to 180°C.

3. Process according to Claim 2, characterized in that the α-modification, which is unstable under dyeing conditions, is heated at temperatures of 80 to 140°C.

4. Process according to Claims 2 and/or 3, characterized in that the α-modification, which is unstable under dyeing conditions, is heated in aqueous suspension.

5. Process according to one or more of Claims 2 to 4, characterized in that the α-modification, which is unstable under dyeing conditions, is heated in the presence of one or more surface-active agents and/or one or more solvents.

6. Process according to one or more of Claims 2 to 5, characterized in that the α-modification, which is unstable under dyeing conditions, is heated in the course of conversion into a very fine division.

7. Use of the modification of the dyestuff of formula I, which is stable under dyeing conditions, mentioned in Claim 1, (β-modification) for dyeing and printing fibre materials of cellulose esters or synthetic linear polyesters or mixed fabrics of such polyester fibre materials with wool or viscose staple.

## Claims (Claims for the following Contracting State(s): ES)

1. Process for preparing the β-modification, which is stable under dyeing conditions, of the dyestuff of the formula I 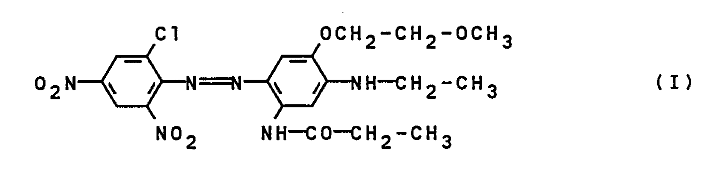 with the x-ray diffraction diagram (Cu-Kα radiation) having the following lines at the diffraction angle 2 ϑ (°):
| | |
|---|---|
| lines of high intensity: | 4.8; 25.4; 26.2; |
| lines of medium intensity: | 7.6; 8.1; 14.5; 19.7; 20.5; 21.5; 22.9; 23.8; 24.3; |
| lines of low intensity: | 6.2; 6.6; 11.1; 11.8; 12.4; 13.0; 13.6; 15.3; 18.7; 28.0; 28.7; 29.4; 30.5; 31.5; 32.3, |
characterized in that the dyestuff of the formula I in the α-modification, which is unstable under dyeing conditions, is heated at temperatures of 60 to 180°C.

2. Process according to Claim 1, characterized in that the α-modification, which is unstable under dyeing conditions, is heated at temperatures of 80 to 140°C.

3. Process according to Claims 1 and/or 2, characterized in that the α-modification, which is unstable under dyeing conditions, is heated in aqueous suspension.

4. Process according to one or more of Claims 1 to 3, characterized in that the α-modification, which is unstable under dyeing conditions, is heated in the presence of one or more surface-active agents and/or one or more solvents.

5. Process according to one or more of Claims 1 to 4, characterized in that the α-modification, which is unstable under dyeing conditions, is heated in the course of conversion into a very fine division.

6. Use of the modification of the dyestuff of formula I, which is stable under dyeing conditions, prepared according to Claim 1, (β-modification) for dyeing and printing fibre materials of cellulose esters or synthetic linear polyesters or mixed fabrics of such polyester fibre materials with wool or viscose staple.

## Revendications (Revendications pour l'(les) Etat(s) contractant(s) suivant(s): DE, GB, FR, IT, LI, CH)

1. Forme β, de couleur stable du colorant de formule I 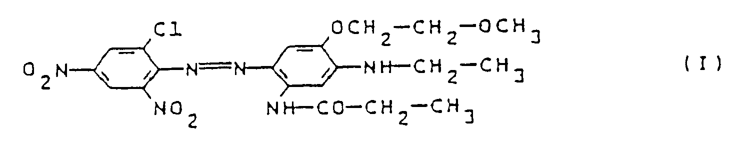 dont le diagramme de diffraction des rayons X (radiation k_{α} du Cu) présente les raies suivantes pour les angles de diffraction 2ϑ (°) :
| | |
|---|---|
| Raies de forte intensité : | 4,8; 25,4; 26,2; |
| Raies d'intensité moyenne : | 7,6; 8,1; 14,5; 19,7; 20,5; 21,5; 22,9; 23,8; 24,3 ; |
| Raies de faible intensité : | 6,2; 6,6; 11,1; 11,8; 12,4; 13,0; 13,6; 15,3; 18,7; 28,0; 28,7; 29,4; 30,5; 31,5; 32,3. |

2. Procédé pour préparer la forme β de couleur stable selon la revendication 1, du colorant de formule I, caractérisé en ce qu'on chauffe, à des températures de 60 à 180 °C, la forme α de couleur instable, du colorant de formule I.

3. Procédé selon la revendication 2, caractérisé en ce qu'on chauffe à des températures de 80 à 140 °C la forme α de couleur instable.

4. Procédé selon les revendications 2 et/ou 3, caractérisé en ce qu'on chauffe la forme α, de couleur instable, en suspension aqueuse.

5. Procédé selon l'une ou plusieurs des revendications 2 à 4, caractérisé en ce qu'on chauffe la forme α, de couleur instable , en présence d'un ou plusieurs agents tensioactifs et/ou d'un ou plusieurs solvants.

6. Procédé selon l'une ou plusieurs des revendications 2 à 5, caractérisé en ce qu'on chauffe la forme α, de couleur instable, au cours de la conversion en une forme très finement divisée.

7. Utilisation de la forme de couleur stable (forme β) du colorant de formule I donnée dans la revendication 1 pour teindre et imprimer des matériaux fibreux à base d'esters de cellulose ou de polyesters linéaires synthétiques ou de tissus constitués d'un mélange de ces matériaux à base de fibres de polyesters et de laine ou de fibranne.

## Revendications (Revendications pour l'(les) Etat(s) contractant(s) suivant(s): ES)

1. Procédé pour préparer la forme β, de couleur stable, du colorant de formule I 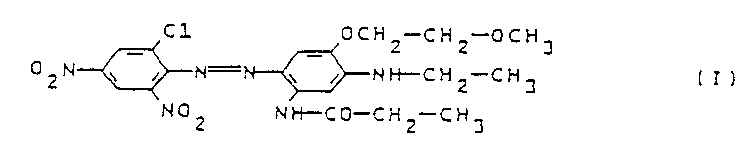 dont le diagramme de diffraction des rayons X (radiation k_{α} du Cu) présente des raies suivantes pour les angles de diffraction 2ϑ (°) :
| | |
|---|---|
| Raies de forte intensité : | 4,8; 25,4; 26,2; |
| Raies d'intensité moyenne : | 7,6; 8,1; 14,5; 19,7; 20,5; 22,9; 23,8; 24,3; |
| Raies de faible intensité : | 6,2; 6,6; 11,1; 11,8; 12,4; 13,0; 13,6; 15,3; 18,7; 28,0; 28,7; 29,4; 30,5; 31,5; 32,3, |
caractérisé en ce qu'on chauffe à des températures de 60 à 180°C la forme α, de couleur instable, du colorant de formule I.

2. Procédé selon la revendication 1, caractérisé en ce qu'on chauffe à des températures de 80 à 140°C la forme α de couleur instable.

3. Procédé selon les revendications 1 et/ou 2, caractérisé en ce qu'on chauffe la forme α de couleur instable, en suspension aqueuse.

4. Procédé selon l'une ou plusieurs des revendications 1 à 3, caractérisé en ce qu'on chauffe la forme α , de couleur instable, en présence d'un ou plusieurs agents tensioactifs et/ou d'un ou plusieurs solvants.

5. Procédé selon l'une ou plusieurs des revendications 1 à 4, caractérisé en ce qu'on chauffe la forme α, de couleur instable, au cours de la conversion en une forme très finement divisée.

6. Utilisation de la forme de couleur stable (forme β), préparée selon la revendications 1, du colorant de formule I donnée dans la revendication 1, pour teindre et imprimer des matériaux fibreux à base d'esters de cellulose ou de polyesters linéaires synthétiques ou de tissus constitués d'un mélange de ces matériaux à base de fibres de polyesters et de laine ou de fibranne.
